# EUROPEAN PATENT SPECIFICATION

(11) **EP 1 209 378 B1**
(45) Date of publication and mention of the grant of the patent: **12.10.2005**
(21) Application number: 01204448.3
(22) Date of filing: 21.11.2001
(51) Int. Cl.: F16D 23/12, F16H 1/16

(54) **A control device for an actuator**
Steuereinrichtung für ein Stellglied
Dispositif de commande pour un actuateur

(30) Priority: 21.11.2000 JP 2000355010; 23.03.2001 JP 2001084149
(43) Date of publication of application: 29.05.2002
(73) Proprietor: AISIN SEIKI KABUSHIKI KAISHA, Aichi-ken (JP); AISIN AI Co., Ltd., Aichi-ken (JP)
(72) Inventor: Hosoi, Yasuhiro, Gamagori-shi, Aichi-ken (JP); Shimizu, Masaru, Toyata-shi, Aichi-ken (JP); Taguchi, Yoshinori, Anjo-shi, Aichi-ken (JP); Haneda, Yoshitomi, Anjo-shi, Aichi-ken (JP); Tozu, Kenji, Yokkaichi-shi, Mie-ken (JP); Miyagawa, Hiroshi, Aichi-ken (JP); Miyazaki, Takeshige, Anjo-shi, Aichi-ken (JP); Aoyama, Yoshiyuki, Nishio-shi, Aichi-ken (JP); Itoh, Yoshiki, Aichi-ken (JP)
(74) Representative: Marshall, John Grahame

(56) References cited:
- FR-A- 2 610 263
- GB-A- 558 898
- GB-A- 2 313 885
- US-A- 4 829 221
- US-A- 5 678 673
- US-A- 5 954 178

## Description

### FIELD OF THE INVENTION

This invention generally relates to a control device for an actuator provided with a worm and a worm wheel in meshing engagement with the worm. More particularly, this invention pertains to a control device for an actuator which controls an engaging condition of a clutch for a torque transmitting between a transmission and a driving power source, for example an internal combustion engine accommodated in a vehicle.

### BACKGROUND OF THE INVENTION

A clutch control device used for known vehicle automated manual transmissions is disclosed in a Japanese Patent Application Toku-Kai-Sho 58-191635. The clutch control device drives an actuator and moves a clutch lever when a vehicle condition requests a shift operation in the transmission so that an engagement /disengagement operation of the clutch is automatically performed. For the engagement / disengagement operation of the clutch, a known clutch for manual transmissions and manually operated by the driver is used.

According to the clutch control device disclosed in the above application, the actuator is a hydraulic type actuator which operates the clutch lever via a hydraulic system. Accordingly, the actuator is structured so as to be moved undesirably due to a force transmitted from the clutch which is inputted to the actuator via a clutch fork. In this condition, even when the torque generated by the actuator is decreased, it is possible that the clutch is maintained under the engagement condition. Therefore, the vehicle may start regardless of the driver's intention.

Somewhat recent developments have led to the automated manual transmission provided with an actuator driven by an electric motor and including a worm and worm wheel. This type of actuator may not be moved undesirably due to the force from the clutch.

The above described actuator driven by the electric motor is generally provided with a stop means for limiting a rotation range of the worm wheel. The rotational torque of the electric motor is transmitted to the worm wheel via the worm. Therefore, the worm wheel may come in contact with the stop means. Further, excess meshing force may occur between the worm and the worm wheel. The excess meshing force may not be removed by the rotational torque of the electric motor so that the actuator may malfunction.

Accordingly, the disclosed clutch control device is susceptible of certain improvements in that the rotational torque and rotational speed of the electric motor are controlled and the worm wheel comes in contact with the stop means without generating big force between the worm wheel and the worm. It needs to understand a contact position between the stop means and the worm wheel for carrying out this operation. Therefore, the excess meshing force between the worm and the worm wheel may not occur.

Each of US-A-5678673, US-A-5954178 and FR-A-2610263 discloses an electric control device for an actuator provided with an electric motor, a worm, a worm wheel and stop means. Contact sensing means determine when the worm wheel has reached the limit of its permitted movement and is in contact with the stop means, and that limit of movement information is memorized. Despite that level of control, however, there is a need for a more precise control for such actuators in practice, because they may impose excess meshing force between the worm wheel and the worm before the actuator stops.

### SUMMARY OF THE INVENTION

This invention provides an electric control device for an actuator provided with an electric motor, a worm, a worm wheel, and stop means. The electric control device for the actuator according to this invention is characterised by the features set out in claim 1.

Accordingly, the worm wheel comes into contact with the stop means at a small force or a small speed when it is necessary for the worm wheel to come into contact with the stop means. Therefore, excess meshing force may not easily occur between the worm wheel and the worm. And it is possible to contact the worm wheel with the stop means in a smaller time than in the case in which the worm wheel always rotates at a small speed.

Further, the actuator actuates a clutch of a vehicle transmission for an engagement / disengagement operation and preferably includes an assist spring disposed between the worm wheel and an inner wall of a housing. When the worm wheel is rotated in a direction for engaging the clutch, the assist spring is employed for biasing the worm wheel in a direction that driving force from an engine is transmitted to the transmission. On the contrary, when the worm wheel is rotated in a direction for disengaging the clutch, the assist spring is employed for biasing the worm wheel in a direction that driving force from the engine is not transmitted to the transmission. Therefore, the clutch may be prevented from being disengaged due to external force.

### BRIEF DESCRIPTION OF THE DRAWING FIGURES

Fig. 1 is a schematic block view illustrating a clutch control device according to an embodiment of the present invention for use in a vehicle transmission;
Fig. 2 is a cross sectional view of the friction clutch illustrated in Fig. 1;
Fig. 3 is a cross sectional view of the actuator illustrated in Fig. 1;
Fig. 4 is a flow chart illustrating a program that is performed by the CPU for controlling an electric motor;
Fig. 5 is a flow chart illustrating a learning program that is performed by the CPU;
Fig. 6 is a flow chart illustrating a program that is performed by the CPU for controlling a shift operation in a transmission;
Fig. 7 is a flow chart illustrating a program that is performed by the CPU for controlling a clutch engagement operation;
Fig. 8 is a flow chart illustrating a program that is performed by the CPU when a vehicle is brought to a vehicle stationary condition;
Fig. 9 is a graph illustrating a clutch load, an assist load, and a difference load between the clutch load and the assist load in accordance with the present invention; and
Fig. 10 is a flow chart illustrating a modification of the program illustrated in Fig. 8.

### DETAILED DESCRIPTION OF THE INVENTION

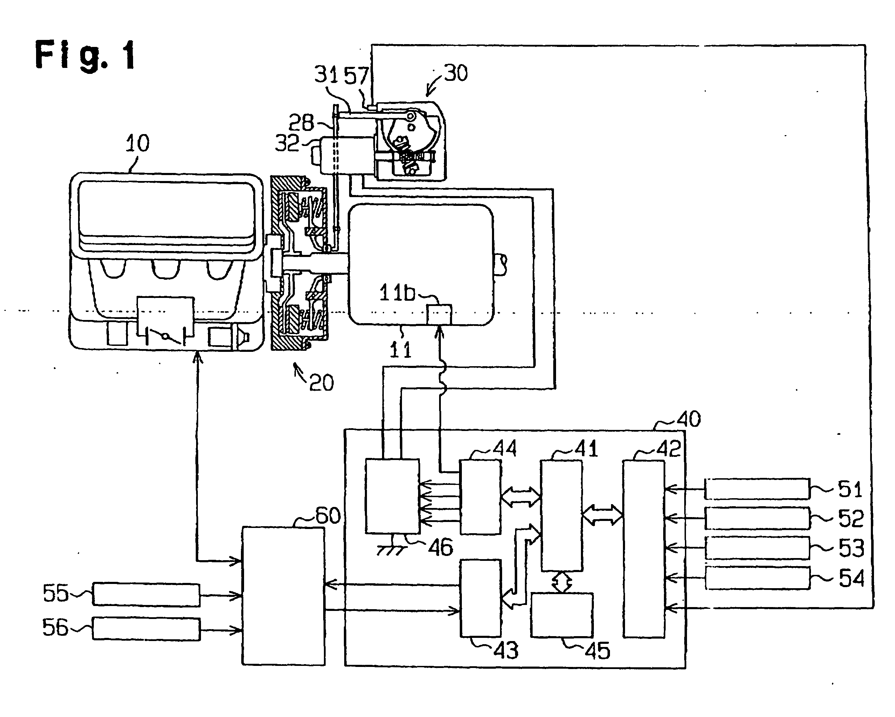

Referring to Fig. 1, a clutch control device according to an embodiment of the present invention includes an engine 10 as a driving power source, a transmission 11, a friction clutch 20 disposed between the engine 10 and the transmission 11, an actuator 30 for operating the clutch 20, and an electric control device 40 for transmitting a command signal to the actuator 30.

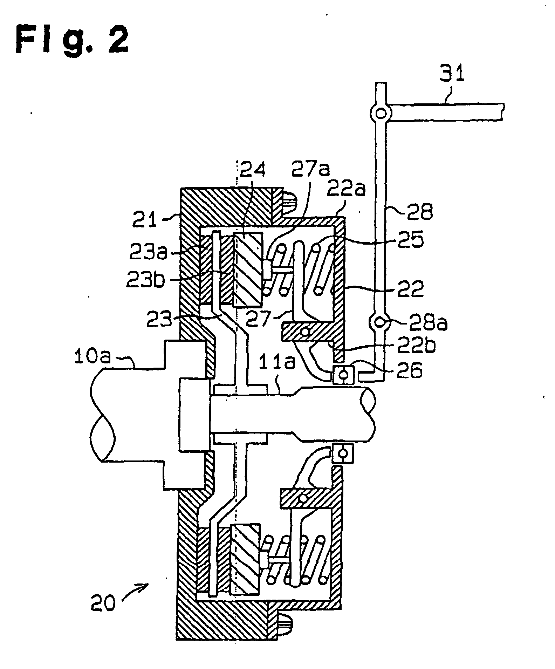

More details of the friction clutch 20 are described below referring to Fig. 2. The friction clutch 20 is provided with a flywheel 21, a clutch cover 22, a clutch disc 23, a pressure plate 24, coil springs 25, a clutch bearing (i.e. a release bearing) 26, a clutch lever 27 formed of a plurality of lever members, and a clutch fork 28 (i.e. an operating member connected to the friction clutch 20).

The flywheel 21 is a cast-iron disc fixed to a crankshaft 10a (i.e. an output shaft of the driving power source) of the engine 10 and is rotatable integrally with the crankshaft 10a. The clutch cover 22 is in an approximately cylindrical shaped structure provided with a cylindrical portion 22a and a lever supporting portion 22b. The lever supporting portion 22b is provided at an inner peripheral side of the cylindrical portion 22a and extends towards the flywheel 21. The clutch cover 22 is fixed to the flywheel 21 at an outer peripheral portion of the cylindrical portion 22a and is rotatable integrally with the flywheel 21.

The clutch disc 23 is a ring-shaped friction plate for transmitting driving torque of the engine 10 to the transmission 11 and is disposed between the flywheel 21 and the pressure plate 24. A central portion of the clutch disc 23 mesh with splines defined in an input shaft 11a of the transmission 11 so that the clutch disc 23 is movable in an axial direction along the input shaft 11a. Clutch facings 23a and 23b are made of friction members and are respectively fixed on each side of an outer peripheral portion of the clutch disc 23.

The pressure plate 24 is in an approximately ring-shaped structure and is operatively connected to the clutch cover 22 so as to rotate corresponding to a rotational movement of the clutch cover 22. Further, the pressure plate 24 is movable back and forth in an axial direction of the input shaft 11a of the transmission 11, i.e. in the axial direction of the friction clutch 20. The pressure plate 24 is employed for pushing the clutch disc 23 towards the flywheel 21, whereby the clutch disc 23 is frictionally engaged with the flywheel 21 and is rotated integrally with the flywheel 21.

The coil springs 25 are axially disposed between the pressure plate 24 and a bottom surface of the inner peripheral side of the cylindrical portion 22a of the clutch cover 22. The coil springs 25 always bias the pressure plate 24 towards the flywheel 21, whereby the biasing force is applied to the clutch disc 23 via the pressure plate 24 so as to push the clutch disc 23 towards the flywheel 21.

The clutch bearing 26 is provided on an outer periphery of the input shaft 11a of the transmission 11 and is axially and slidably disposed between the shift lever 27 and the clutch fork 28. The clutch bearing 26 is in contact with one end portion of each of the lever members of the clutch lever 27. The torque generated by the actuator 30 is transmitted to the clutch lever 27 via the clutch bearing 26.

The other end portion of each of the lever members of the clutch lever 27 is operatively connected to the pressure plate 24 via a connecting member 27a. The clutch lever 27 is movably supported by the supporting portion 22b and is movable in response to the torque transmitted via the clutch bearing 26.The clutch lever 27 is employed for moving the pressure plate 24 away from the flywheel 21 in the axial direction. The clutch lever 27 applies the pressure plate 24 with a force which biases the pressure plate 24 in an opposite direction of the biasing force of the coil springs 25.

The clutch fork 28 is movably supported at a supporting point 28a by a transmission casing (not shown). An end portion of the clutch fork 28 is in contact with the clutch bearing 26 and the other end portion of the clutch fork 28 is connected to a tip end portion of a rod 31 of the actuator 30. The clutch fork 28 serves to move the clutch bearing 26 in the axial direction in response to an operation of the actuator 30. The biasing force by the coil springs 25 is transmitted via the clutch lever 27 and the clutch bearing 26 to the clutch fork 28 which is one of the operating members of the clutch 20. When the clutch fork 28 is moved in the direction of the biasing force of the coil springs 25, driving force of the engine 10 is transmitted to the transmission 11. On the contrary, when the clutch fork 28 is moved in the opposite direction, the driving force of the engine 10 is not transmitted to the transmission 11.

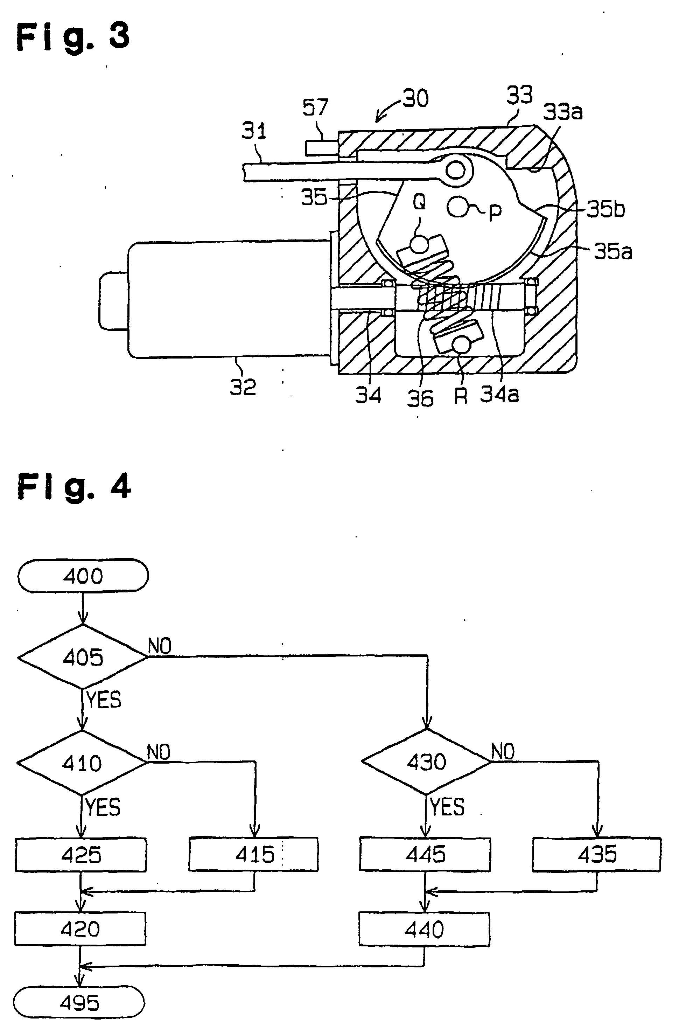

Referring to Fig. 3, the actuator 30 is provided with a direct current motor 32 and is accommodated in an appropriate position in a vehicle via a housing 33 supporting the direct current motor 32. The housing 33 houses a worm 34 (rotatable about its own axis), a worm wheel 35 in the shape of a sector gear, and an assist spring 36. The worm 34 is rotatably driven by the direct current motor 32. The worm wheel 35 is movably supported around a rotational center P by the housing 33. An arcuate toothed outer peripheral portion of the worm wheel is engaged with the worm 34.
The end of the rod 31 remote from the clutch fork 28 is rotatably supported by the worm wheel 35. Corresponding to the rotation of the motor 32, the worm 34 and the worm wheel 35 are rotated. Therefore, the rod 31 is moved back and forth relative to the housing 33. Referring to Figs. 1, 2, and 3, when the rod 31 is moved in a right direction in each figure, the clutch disc 23 is disengaged from the flywheel 21. On the other hand, when the rod 31 is moved in a left direction in each figure, the clutch disc 23 is frictionally engaged with the flywheel 21.

The direct current motor 32 is rotated in a first direction when electric current is supplied in a first direction (in a positive direction). Referring to Fig. 3, in this case the worm wheel 35 is rotated clockwise around the rotation center P via the worm 34. Therefore, the rod 31 is moved to the right and the clutch disc 23 is disengaged from the flywheel 21. On the contrary, the direct current motor 32 is rotated in a second direction (opposite to the first direction) when electric current is supplied in a second direction opposite to the first (a negative direction). Referring to Fig. 3, in this case the worm wheel 35 is rotated counterclockwise around the rotation center P via the worm 34. Therefore, the rod 31 is moved to the left until the clutch disc 23 becomes frictionally engaged with the flywheel 21. The larger the absolute value of the supplied electric current is, the larger is the rotational torque generated by the motor 32.

The assist spring 36 is always in a compressed condition. An end portion of the assist spring 36 is connected to the worm wheel 35 at a position Q and the other end portion of the assist spring 36 is connected to the housing 33 at a position R. When the assist spring 36 is located at a turnover point thereof, the rotation center P, the position Q, and the position R are connected by a straight line.

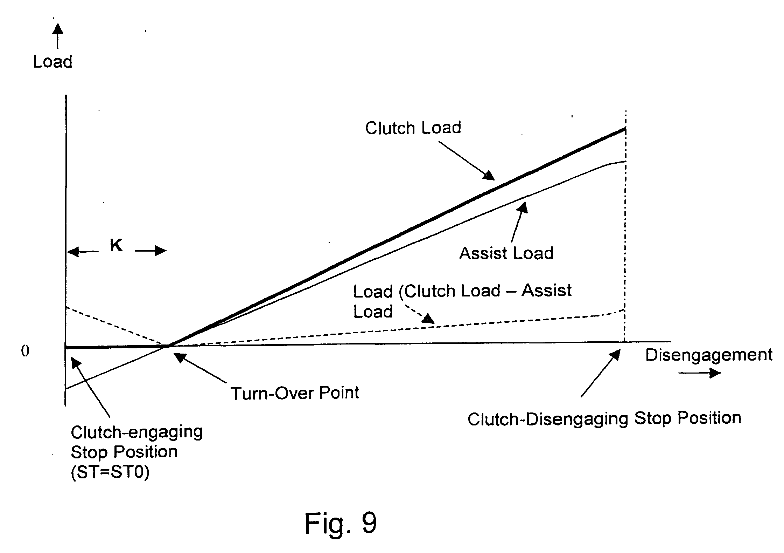

When the worm wheel 35 is rotated for an engagement or disengagement operation of the friction clutch 20 upon a normal shift operation when the vehicle is moving, the position Q is always located at a left-hand side of the turnover point. Therefore, the worm wheel 35 is always biased by the assist spring 36 so as to be rotated clockwise. The biasing force (an assist load) of the assist spring 36 is applied in an opposite direction of a clutch load of the friction clutch 20, i.e. in an opposite direction to a reaction force of the clutch 20 acting to move the rod 31 to the left in Fig. 3. As shown in Fig. 9, the motor 32 is required to generate a rotational torque (shown in broken line) corresponding to a difference between the clutch load and the assist load. Therefore, the provision of the assist spring 36 enables the torque generated by the motor 32 for the engagement /disengagement operation of the clutch 20 to be decreased for normal running of the vehicle, whereby the direct current motor 32 can be downsized.

When the vehicle is stopped or parked, the position Q is located the right side of the turnover point. Therefore, the worm wheel 35 is biased counterclockwise by the assist spring 36 to assist the engagement of the friction clutch 20.

A stop surface 35b is defined at a side edge surface of the worm wheel 35. A stop means 33a is defined at an inner surface of the housing 33. The stop surface 35b comes in contact with the stop means 33a when the worm wheel 35 is rotated counterclockwise at a larger angle than a predetermined angle, i.e. when the worm wheel 35 is rotated at a larger angle than a predetermined angle in response to the biasing force of the coil springs 25. Alternatively, the stop means 33a may be separately formed from the housing 33 and may be fixed to the housing 33, or the stop surface 35b and the stop means 33a may be provided elsewhere in the actuator, for example between the rod 31 and the housing 33.

It will be seen from a comparison of Figs. 3 and 9 that when the worm wheel 35 is rotated counter clockwise between the rotational angle at which the position Q is at the turn-over point and the rotational angle at which the stop surface 35b contacts the stop means 33a, the assist spring assists the counter clockwise rotation of the worm wheel 35 and acts to augment the action of the springs 25. This sector of spring-assisted angular movement of the worm wheel is shown in Fig. 9 as the zone K. When the worm wheel 35 is rotated beyond the turn-over point in the clockwise direction, the assist spring 36 assists the rotation of the worm wheel in the clockwise direction and acts counter to the springs 25.

Referring to Fig. 1, the electric control device 40 is provided with a microcomputer (CPU) 41, interfaces 42, 43, 44, an EEPROM (an electrically erasable PROM) 45, and a drive circuit 46 for the motor 32. The CPU 41 includes a read only memory (ROM, not shown) and a random access memory (RAM, not shown).

The interface 42 is connected to the CPU 41 via a bus line. The interface 42 is further connected to a shift lever load sensor 51 (a first detecting means), a vehicle speed sensor 52 (a second detecting means), a gear position sensor 53 (a third detecting means), a transmission input shaft rotational speed sensor 54 (a fourth detecting means), and a stroke sensor 57 (a seventh detecting means). The shift lever load sensor 51 detects a load generated upon an operation of a transmission shift lever (not shown). The vehicle speed sensor 52 detects a vehicle speed V. The gear position sensor 53 detects an actually selected shift stage. The transmission input shaft rotational speed sensor 54 detects a rotational speed of the input shaft 11a. The stroke sensor 57 detects a position of the rod 31 which is moved back and forth. The stroke ST of the rod 31 corresponds to the rotation angle of the worm wheel 35. The interface 42 supplies respective signals detected by the above described sensors to the CPU 41.

The interface 43 is connected to the CPU 41 via a bus line. The interface 43 is further connected to an engine control device 60 for a mutual communication. The engine control device 60 is connected to an engine rotational speed sensor 56 (a sixth detecting means) for detecting an engine rotational speed NE and a throttle opening sensor 55 (a fifth detecting means) for detecting a throttle opening degree TA. The engine rotational speed and the throttle opening degree are inputted to the CPU 41 via the engine control device 60 and the interface 43.

The EEPROM 45 is a nonvolatile memory which can memorize and maintain data even when electric current is not supplied. The EEPROM 45 is connected to the CPU 41 via a bus line. When electric current is supplied, the EEPROM 45 stores data supplied from the CPU 41, including an initial position ST0 of the stroke of the rod 31 that is described later. Further, the EEPROM 45 supplies the memorized data to the CPU41.

The drive circuit 46 is provided with four switching elements (not shown) which are turned on or turned off depending on command signals from the interface 44 connected to the CUP 41 via a bus line. These switching elements form a known bridge circuit and supply a desired amount of electric current (motor electric current IM) in both positive and negative directions to the motor 32. The interface 44 is connected to a transmission shifting actuator 11b for selecting a shift gear out of a plurality of shift gears and for supplying control signals for the transmission shifting actuator 11b.

The engine control device 60 is mainly formed of a microcomputer (not shown) and controls fuel consumption and ignition timing of the engine 10. As aforementioned, the engine control device 60 is connected to the throttle opening sensor 55 and the engine rotational speed sensor 56 so as to input signals from each sensor.

An operation of the clutch control device with the above-described structure is described below.

In a vehicle with a manual transmission, a driver physically operates a clutch pedal. However the vehicle utilizing the illustrated embodiment of the present invention is provided with the electric control device 40 for driving the actuator 30 for an automatic control of the friction clutch 20. The electric control device 40 controls the electric current IM supplied to the motor 32 in response to a vehicle driving condition. Corresponding to the electric current IM supplied to the motor 32, the actuator 30 automatically performs the engagement / disengagement operations of the friction clutch 20.

The engagement / disengagement operations of the clutch 20 are performed, for example, under the following three conditions; (1) when the CPU 41 detects that the vehicle state is shifting from a vehicle running state to a vehicle stationary state, e.g. when the transmission input shaft rotational speed becomes equal to or lower than a predetermined value, (2) when the CPU 41 detects that the load detected by the shift lever load sensor 51 becomes equal to or higher than a predetermined value, and (3) when the CPU 41 detects that an accelerator pedal (not shown) has been depressed while the vehicle is in the stationary state. When the CPU 41 detects that the vehicle has been shifted to the stationary state, the clutch disc 23 is frictionally engaged with the flywheel 21, whereby the shift operation in the transmission 11 is performed to select a gear for parking. In this case, the worm wheel 35 is rotated counterclockwise until the stop surface 35b comes into contact with the stop means 33a.

The operation of the clutch control device is further illustrated with reference to the flow charts illustrated in Figs. 4 to 8 respectively showing various programs performed by the CPU 41. As shown in Fig. 4, the CPU 41 starts a motor control program from step 400 repeatedly at predetermined time intervals. The motor control program is performed to determine an amount of the electric current IM supplied to the motor 32 so that an actual stroke ST of the rod 31 becomes equal to a target stroke STM of the rod 31.

The CPU 41 proceeds to step 405 from the step 400 to determine if the target stroke STM is larger than the actual stroke ST or not. The program is performed under a default condition that the motor 32 had been rotated in the reverse direction until immediately before the present moment and that the target stroke STM is larger than the actual stroke. Therefore, the default answer at step 405 is **Yes** and the CPU 41 then proceeds to step 410 to determine if a value of a rotational direction flag F indicates 1 or not. The value of the rotational direction flag F is set at 1 when the motor 32 is rotated in the first direction, and the value of the rotational direction flag F is set at 0 when the motor 32 is rotated in the reverse direction (see steps 420 and 440 which are described later).

As described above, the motor 32 is first assumed to have been rotated in the reverse direction until immediately before the present moment so that the value of the rotational direction flag F indicates 0. Therefore, the default answer at the step 410 is **No** and the CPU 41 then proceeds to step 415. At the step 415, the motor electric current IM is set at a predetermined positive value (IM0). Therefore, the positive electric current IM0 is supplied to the motor 32 via the interface 44 and the drive circuit 46, wherein the motor 32 is rotated in the first direction. Corresponding to the rotation of the motor 32 in the first direction, the worm wheel 35 is rotated clockwise and the rod 31 is moved to the right in Fig. 3. Therefore, the actual stroke ST detected by the stroke sensor 57 is increased, wherein the clutch disc 23 is moved to the right. The CPU 41 then proceeds to step 420 to set the value of the rotational direction flag F at 1 indicating that the motor 32 is rotating in the first direction. The CPU 41 proceeds to step 495 to conclude the process.

After the predetermined period of time passes, the CPU 41 restarts the program from the step 400 and proceeds to the step 405. This stage is the time immediately after the rotation of the motor 32 in the first direction commences, wherein the target stroke STM is larger than the actual stroke ST. Therefore, the answer at the step 405 is **Yes** so that the CPU 41 proceeds to the step 410 to determine if the value of the rotational direction flag F indicates 1 or not. The value of the rotational direction flag F has been set at 1 at the step 420 of the previous cycle. Therefore, the answer at step 410 is **Yes** and the CPU 41 proceeds to step 425. At the step 425, the actual electric current IM at that moment is increased by a predetermined positive increment i so as to generate a new motor electric current IM. Accordingly, the motor 32 is supplied with positive electric current with a larger absolute value, wherein the motor 32 is rotated in the first direction with a larger rotational torque. The rod 31 is moved further to the right in Fig. 3, the actual stroke ST detected by the stroke sensor 57 is further increased, and the clutch disc 23 is moved further to the right in the direction of disengagement from the flywheel 21. The CPU 41 proceeds to the step 420 and the step 495 to conclude the program again.

As described above, when the target stroke STM is set to be larger than the actual stroke ST, the motor 32 is supplied with positive electric current, wherein the clutch disc 23 is moved progressively to the right until it becomes disengaged from the flywheel 21.

Next, an operation of the clutch control device will be described, again referring to the flow chart illustrated in Fig. 4, wherein the target stroke STM is set to be smaller than the actual stroke ST under the condition that the motor 32 has been rotated in the first direction.

The CPU 41 starts the motor control program from the step 400 after the predetermined time interval and then proceeds to the step 405. In this case, the target stroke STM is set to be smaller than the actual stroke ST. Therefore, the answer at the step 405 is **No** and the CPU 41 proceeds to step 430 to determine if the value of the rotational direction flag F indicates 0 or not.

If the motor 32 had previously been rotating in the first direction, the value of the rotational direction flag F indicates 1. Therefore, the answer at the step 430 is **No** and the CPU 41 proceeds to step 435. At the step 435, the motor electric current IM is set at a predetermined negative value, -IM0 (IM0 > 0). Therefore, the motor 32 is supplied with negative electric current via the interface 44 and the drive circuit 46. Therefore, the motor 32 is rotated in the reverse direction and the worm wheel 35 is rotated counterclockwise in Fig. 3. Accordingly, the rod 31 is moved to the left in Fig. 3, the actual stroke ST detected by the stroke sensor 57 is decreased, and the clutch disc 23 is moved to the left towards frictional engagement with the flywheel 21. The CPU 41 then proceeds to step 440 to set the value of the rotational direction flag F at 0 indicating that the motor 32 is rotated in the reverse direction. The CPU 41 proceeds to the step 495 to conclude the program.

After the predetermined time interval, the CPU 41 restarts the program from the step 400 and proceeds to the step 405. This stage is the time immediately after the rotation of the motor 32 in the reverse direction was started, wherein the target stroke STM is smaller than the actual stroke ST. Therefore, the answer at the step 405 is **No** and the CPU 41 proceeds to the step 430. The value of the rotational direction flag F has been set at 0 at the step 440 of the previous cycle. Therefore, the answer at the step 430 is **Yes** and the CPU 41 then proceeds to step 445. At the step 445, the predetermined positive value i is subtracted from the actual motor electric current IM so that a new electric motor current IM is generated.

The motor 32 is thus supplied with negative electric current with a larger absolute value and the motor 32 is rotated in the reverse direction with larger rotational torque. The rod 31 is moved further to the left, the stroke detected by the stroke sensor 57 is further decreased, and the clutch disc 23 is moved further to the left.

As described above, when the target stroke STM is set to be smaller than the actual stroke ST, the motor 32 is supplied with negative electric current with a progreesively increasing absolute value, and the clutch disc 23 is moved to the left towards frictional engagement with the flywheel 21.

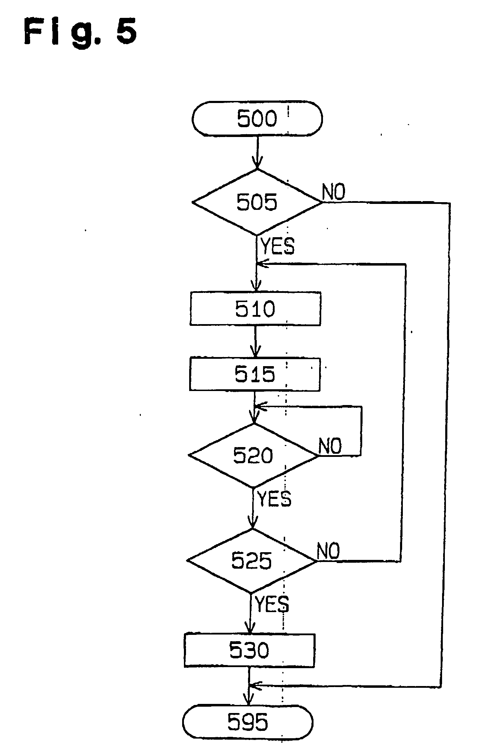

Referring to a flow chart illustrated in Fig. 5, a learning program for memorizing a stroke ST is described below when the stop surface 35b of the worm wheel 35 comes into contact with the stop means 33a.

The CPU 41 repeats the learning program starting from step 500 afterpredetermined time intervals and proceeds to step 505 to determine if learning conditions are satisfied or not. The learning conditions are satisfied when data regarding the initial position ST0 is not memorized as regular data in the EEPROM 45, for example, when the electric control device 40 or the actuator 30 are respectively replaced with the other one, or when the data is destroyed due to noise. Under any one of the above described conditions, the answer at the step 505 is **Yes** and the CPU 41 proceeds to step 510. At the step 510, a predetermined positive value α is subtracted from a target stroke STM at that moment so as to regenerate a new target stroke STM.

When the motor control program is performed following the flow chart illustrated in Fig. 4 under the above described condition, the answer at the step 405 is **No** and the CPU 41 proceeds to the step 430, wherein the motor 32 is supplied with negative electric current and is rotated in the reverse direction. Therefore, the worm wheel 35 is rotated counterclockwise, the rod 31 is moved tothe left, and the clutch disc 23 is moved to the left towards frictional engagement with the flywheel 21.

Referring to Fig. 5, the CPU 41 proceeds to step 515 to reset a value of a timer T and start timekeeping by the timer T. The CPU 41 proceeds to step 520 to determine if the value of the timer T is larger than a predetermined period of time T0. When the predetermined period of time T0 passes, the answer of the CPU 41 at the step 520 is **Yes** and the CPU 41 then proceeds to step 525 to determine whether or not a difference between the actual stroke ST and the target stroke STM is larger than a positive judgment value ΔS (the positive judgment value ΔS is smaller than the predetermined positive value α) or not.

The predetermined positive value α is set to be smaller than a changing amount β of the target stroke STM upon the normal clutch control operation. The predetermined period of time T0 is set to be larger than a time required to bring the actual stroke ST equal to the target stroke STM. That is, when the contact portion 35a is not in contact with the stop means 33a, the motor control program referring to the flow chart illustrated in Fig. 4 is performed more than once and the actual stroke ST becomes approximately equal to the target stroke STM. Therefore, the amount calculated by subtracting the target stroke STM from the actual stroke ST is smaller than the positive judgment value ΔS. Therefore, the answer at the step 525 is **No** and the CPU 41 returns to the step 510. The CPU 41 repeats the program from the step 510 to the step 525.

As described above, the target stroke STM is decreased gradually at the step 510. When the rotation of the worm wheel 35 counterclockwise is continued, the stop surface 35b comes into contact with the stop means 33a so that the rotation of the worm wheel 35 is stopped. That is, the actual stroke ST is not decreased any more. Accordingly, the difference between the actual stroke ST and the target stroke STM becomes larger than the judgment value ΔS, wherein the answer of the CPU 41 at the step 525 is **Yes** and the CPU 41 proceeds to step 530. At the step 530, the actual stroke ST at that moment is memorized as the initial stroke ST0, i.e. as an initial value or a learning value, by the EEPROM 45. The CPU 41 then concludes the learning program at the step 595. The steps 510 through 525 serve as a contact judgment means to determine whether or not the worm wheel 35 is in contact with the stop means 33a.

On the other hand, when the CPU 41 starts the learning program from the step 500 and the initial position ST0 is already memorized in the EEPROM 45 the answer at the step 505 is **No** and the CPU 41 directly proceeds to the step 595 to conclude the learning program immediately.

According to the learning program referring to the flow chart in Fig. 5, the predetermined positive value α is subtracted from the target stroke STM every predetermined period of time and the motor 32 is rotated at an extremely slow speed. Therefore, the stop surface 35b comes gently into contact with the stop means 33a of the housing 33 preventing an excess meshing force between the worm wheel 35 and the worm 34. The actual stroke ST at that moment is memorized as the initial position ST0 by the EEPROM 45.

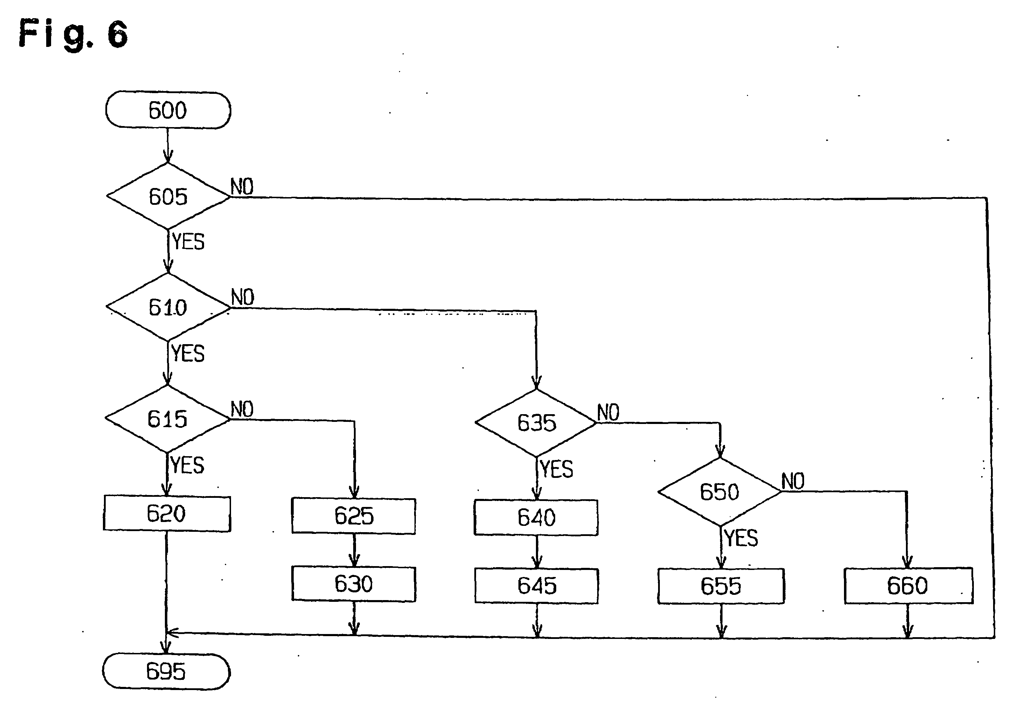

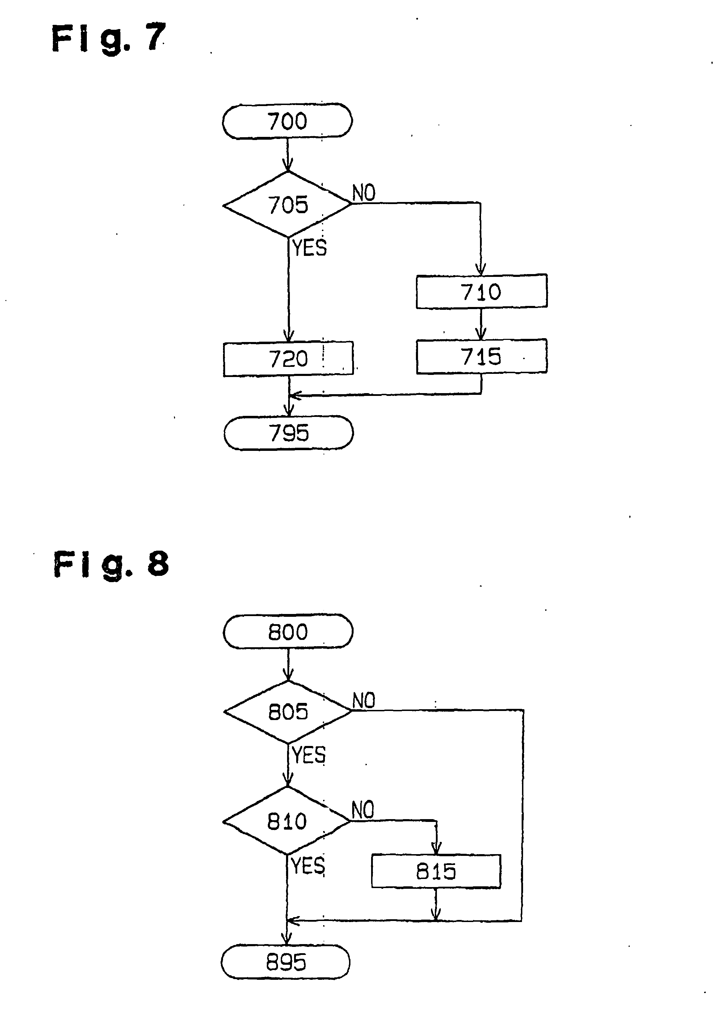

Next, an operation of a shift control during normal driving will be described referring to the flow charts illustrated in Figs. 6 and 7. The CPU 41 starts the shift control program illustrated in Fig. 6 at step 600 and proceeds to step 605 to determine if the shift control has been performed or not. The shift control program is repeated whenever the shift lever load sensor 51 detects a variable load corresponding to a variation of the shift lever position.

The program is performed under a default condition that the driver has requested a shift operation by operating the shift lever. Therefore, the answer at the step 605 is **Yes** and the CPU 41 proceeds to step 610 to determine whether or not the transmission 11 has yet been shifted to a neutral shift condition. If the transmission 11 has not yet reached the neutral shift stage, the time must be the time immediately after the shift operation has started. Therefore, the transmission 11 has not been shifted to the neutral shift condition, wherein the answer at the step 610 is **Yes** and the CPU 41 proceeds to step 615.

At the step 615, the CPU 41 determines whether or not the clutch disc 23 has yet completely disengaged from the flywheel 21, based upon an output (an actual stroke ST) from the stroke sensor 57. If clutch disc 23 is still engaged, the answer at the step 615 is **Yes** and the CPU 41 proceeds to step 620. At the step 620, the target stroke STM is increased by a predetermined value β (β>α>0). The CPU 41 then proceeds to step 695 to conclude the program. Therefore, the motor 32 is supplied with a positive electric current and the clutch disc 23 is moved to the right in the direction of disengagement from the flywheel 21.

The clutch disc 23 is completely disengaged after the above-described program is continued. At the next cycle, after the predetermined time lapse, the CPU 41 proceeds to the step 615, answers **No** at the step 615, and proceeds to step 625. At the step 625, the motor 32 is supplied with a predetermined electric current and the clutch disc 23 is maintained under the disengagement condition. This is called a disengagement maintaining control. The CPU 41 then proceeds to step 630, transmits the command signal to the transmission shifting actuator 11b, and performs a shift control for shifting the transmission 11 from a condition which transmits driving power to the neutral condition.

When the transmission 11 is in the neutral condition, and the next cycle of the CPU 41 takes place, the CPU 41 answers **No** at the step 610 and the CPU 14 then proceeds to step 635. At the step 635, the CPU 41 determines whether or not the transmission 11 has yet shifted to the driving force transmitting condition, based upon the signal from the gear position sensor 53. This stage commences at the time immediately after the transmission 11 was shifted to the neutral condition at the step 630. Therefore, the initial answer at the step 635 is **Yes** and the CPU 41 proceeds to step 640, wherein the clutch disc 23 is maintained under the disengagement condition. The CPU 41 then proceeds to step 645 to transmit the command signal to the transmission shifting actuator 11b. Therefore, in response to the command signal, a desired shift stage is selected in the transmission 11 for transmitting the driving power from the engine 10 to the transmission 11, i.e. the transmission 11 is shifted to the driving power transmitting condition. The CPU 41 then proceeds to the step 695 to conclude the program cycle again.

The transmission 11 is subsequently shifted from the neutral condition to a new gear shift condition. On the first program cycle of the CPU 41 after completion of that shift change, the CPU 41 answers **No** at the step 635 and proceeds to step 650. At the step 650, the CPU 41 determines whether or not the clutch disc 23 has yet completely engaged with the flywheel 21, based upon the output (an actual stroke ST) from the stroke sensor 57.

Initially the clutch disc 23 has not been engaged with the flywheel 21. Therefore, the answer at the step 650 is **Yes** and the CPU 41 then proceeds to step 655. At the step 655, the CPU 41 performs a subroutine for a clutch engagement control illustrated in Fig. 7. The CPU 41 then proceeds to the step 695 once again to conclude the program cycle.

Now, the subroutine for the clutch engagement control is described below in detail, referring to the flow chart illustrated in Fig. 7.

When the CPU 41 proceeds to the step 655 in the flow chart in Fig. 6, the CPU 41 starts a program for the clutch engagement control at step 700 in Fig. 7 and proceeds to step 705. At the step 705, the CPU 41 determines whether or not the actual stroke ST is smaller than a minimum value (ST0 + K) calculated by adding a predetermined positive value K to the initial position ST0 memorized at the learning program illustrated in Fig. 5. The positive value K is predetermined to completely engage the clutch disc 23 with the flywheel 21 when the actual stroke becomes equal to the minimum value (ST0 + K).

Initially the clutch disc 23 is disengaged, so that the answer at the step 705 is **No** and the CPU 41 then proceeds to step 710. At the step 710, the predetermined value β is subtracted from the target stroke STM so as to generate a new target stroke STM = (STM - β). The new target stroke STM is memorized by the EEPROM 45. Accordingly, the motor control program illustrated in Fig. 4 is performed and the clutch disc 23 is moved in the left direction to be frictionally engaged with the flywheel 21. As aforementioned, the value β is larger than the value α used at the learning process illustrated in Fig. 5. The CPU 41 sets the clutch engagement flag at 0 at step 715, proceeds to the step 795, and returns to the step 655 in Fig. 6. The value of the clutch engagement flag indicates 0 when the clutch disc 23 is not engaged with the flywheel 21, and the value of the clutch engagement flag indicates 1 when the clutch disc 23 is frictionally engaged with the flywheel 21.

The step 710 is repeatedly performed with every repetition of the step 655 in Fig. 6, wherein the actual stroke ST is decreased. When the actual stroke ST becomes smaller than the minimum value (ST0 + K), the CPU 41 answers **Yes** at the step 705 and then proceeds to step 720 to set the clutch engagement flag at 1. The CPU 41 returns to the step 655 via the step 795 to terminate the clutch engagement control.

When controlling the clutch engagement during shift operations under normal driving conditions, the actual stroke ST is controlled not to become smaller than the initial position ST0 (see the step 705 in Fig. 7), so that the stop surface 35b does not come in contact with the stop means 33a. Therefore, even when the target stroke STM is large, corresponding to a high speed change, an excessive meshing force is avoided between the worm wheel 35 and the worm 34.

Referring again to Fig. 6, when the clutch disc 23 is completely engaged with the flywheel 21 and the CPU 41 next performs the step 650 the answer at the step 650 is **No** and the CPU 41 then proceeds to step 660 to set a flag indicating that the shift control is terminated.

Accordingly, when the CPU 41 proceeds from the step 600 to the step 605 at the next cycle, the CPU 41 answers **No** at the step 605 and directly proceeds to the step 695.

Referring to the flow chart illustrated in Fig. 8, a parking control program is described below, for engaging the clutch when the vehicle is stationary.
The CPU 41 starts the parking control program at step 800 repeatedly at predetermined time intervals and proceeds to step 805 to determine if parking conditions are satisfied or not. The parking conditions are satisfied, for example, when the engine rotational speed NE detected by the engine rotational speed sensor 56 is equal to zero. Further, the parking conditions are satisfied, for example, when a parking brake switch (not shown) detects an operating condition of a parking brake pedal (not shown) and so indicates to the CPU 41. The program is initially performed under a default assumption that the parking conditions are satisfied. The CPU 41 answers **Yes** at the step 805 and then proceeds to step 810. At the step 810, the CPU 41 determines if the actual stroke ST is equal to or smaller than the initial position ST0 memorized at the learning process. As described above, the actual stroke ST is controlled not to be smaller than the initial position (ST0 + K) under normal driving conditions. Therefore, the answer at the step 810 is initially **No** and the CPU 41 proceeds to step 815. At the step 815, the predetermined positive value α is subtracted from the current target stroke STM so as to generate a new target stroke STM - α. The CPU 41 proceeds to step 895 to conclude the program cycle.
The program is performed repetitively, repeating the steps 800, 805, 810, and 815 every predetermined period of time. Therefore, the actual stroke ST ultimately becomes equal to the initial position ST0. In this case, when the CPU 41 proceeds to the step 810, the CPU 41 answers **Yes** at the step 810 and proceeds to step 895, wherein the parking control program is terminated.

As described above, when the vehicle is shifted to the vehicle stationary condition, the actual stroke ST is gradually decreased to the initial position ST0 by the predetermined value α every cycle of the program 800. Therefore, the stop surface 35b of the worm wheel 35 comes into contact with the stop means 33a with no excessive force being applied to the stop surface 35b, wherein an excess meshing force is not easily generated between the worm wheel 35 and the worm 34. Further, in this case, the position Q is located at the right-hand side of the turnover point and the clutch disc 23 is biased by the assist spring 36 to the left to be frictionally engaged with the flywheel 21. Therefore, the clutch disc 23 is more securely maintained under the engagement condition when the vehicle is shifted to the stationary condition.

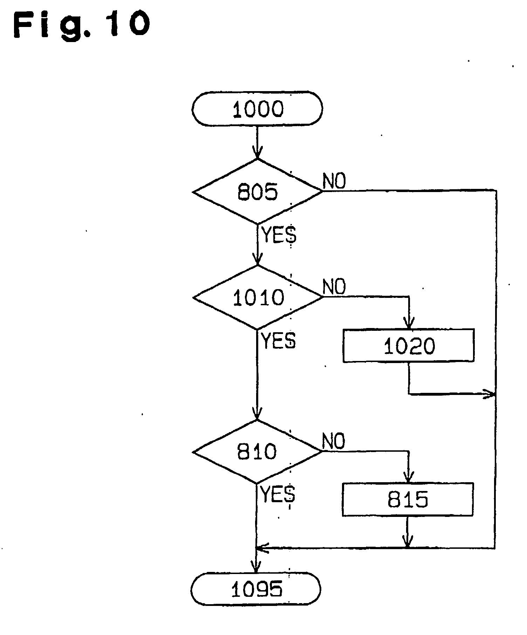

A modification of the parking control program described above with reference to Fig. 8 is illustrated in Fig. 10. Steps in the flow chart illustrated in Fig. 10 which are identical to corresponding steps in Fig. 8 have been given the identical reference numerals and a detailed description of those steps is omitted for simplifying the description.

The CPU 41 starts the parking control program at step 1000 every predetermined period of time and proceeds to the step 805 to determine if the parking conditions are satisfied or not. When the parking conditions are satisfied, the CPU 41 answers **Yes** at the step 805 and proceeds to step 1010. At the step 1010, the CPU 41 determines if the actual stroke ST is equal to a value (ST0 + STA) in which ST0 is the initial position of the worm wheel 35 and STA is a positive small value which is set to be smaller than the predetermined positive value K.

When the parking control program is started, i.e. when the worm wheel 35 located at a predetermined angle is rotated in a direction of the stop means 33a, the actual stroke ST is larger than the value ST0 + STA. Therefore, the CPU 41 answers **No** at the step 1010 and proceeds to step 1020. At the step 1020, the predetermined value β is subtracted from the target stroke STM at that moment so that a new target stroke STM is generated. The CPU 41 then proceeds to step 1095 to conclude that cycle of the parking control program.

The CPU 41 repeatedly performs the steps 1000, 805, 1010, 1020, and 1095 so that the actual stroke ST becomes equal to or smaller than the value ST0 + STA. The target stroke STM is decreased by the predetermined value β every performed cycle of the program from the steps 1000 through 1095. Therefore, the motor 32 is supplied with electric current in the negative direction which has a substantially large absolute value, wherein the clutch disc 23 is moved in the left direction to be frictionally engaged with the flywheel 21 at a relatively high speed. The worm wheel 35 is rotated at a relatively high speed and the stop surface 35b approaches the stop means 33a.

The decreasing of the actual stroke ST is continued and eventually the actual stroke ST becomes equal to or smaller than the value ST0 + STA. That is, the worm wheel 35 is rotated counterclockwise until immediately before the stop surface 35b comes into contact with the stop means 33a. Therefore, when the CPU 41 next performs the step 1010, the answer at the step 1010 is **Yes** and the CPU 41 then proceeds to the step 810 to determine if the actual stroke ST is equal to or smaller than the initial position ST0. In this case, the actual stroke ST is set to be larger than the initial position ST0. Therefore, the answer at the step 810 is **No** and the CPU 41 then proceeds to the step 815. At the step 815, the positive predetermined value α is subtracted from the target stroke STM so as to regenerate a new target stroke STM (STM - α). The CPU 41 proceeds to the step 895 and terminates the program cycle.

According to the above-described program, the target stroke STM is decreased by the predetermined value α (where α < β). The clutch disc 23 is then moved to the left to be engaged with the flywheel 21 at a relatively low speed. Further, the worm wheel 31 is rotated counterclockwise at a relatively low speed as the stop surface 35b approaches the stop means 33a.

The steps 1000, 805, 1010, 810, and 815 are repeatedly performed. Eventually the actual stroke ST becomes equal to the initial position ST0. When the CPU 41 proceeds to the step 810, the CPU 41 answers **Yes** at the step 810 and proceeds to step 1095, wherein a parking control is terminated.

According to the above-described modified program referring to Fig. 10, when the vehicle is shifted to the vehicle stationary condition, the actual stroke ST is decreased down to the value ST0 + STA at a relatively high speed. Therefore, the stop surface 35b initially approaches the stop means 33a at a relatively high speed.

When the actual stroke ST becomes smaller than the value ST0 + STA, the actual stroke ST is decreased to the initial position ST0 by the predetermined value α every performed cycle to reduce the speed of movement to a relatively low speed. Eventually the actual stroke ST becomes equal to the initial position ST0, but the worm wheel 35 comes into contact with the stop means 33a at a relatively low speed. Accordingly, excess meshing force may not easily occur between the worm wheel 35 and the worm 34. Because the worm wheel 35 is rotated at a relatively high speed until the actual stroke ST becomes equal to the value ST0 + STA, the time required for the parking control is shortened.

As described above, according to the embodiment of the present invention, the stop surface 35b of the worm wheel 35 comes in contact with the stop means 33a at a relatively slow speed. The actual stroke ST is memorized as the initial position ST0 and is used for the clutch control. Therefore, excess meshing force may be prevented from occurring between the worm wheel 25 and the worm 34.

According to the preferred embodiment of the present invention, the stop means 33a is provided in the housing 33 to come in contact with the stop surface 35b of the worm wheel 35 when the engagement operation of the clutch 20 is performed.

If desired, an additional stop means may also be provided in or on the housing 33 to come in contact with another stop surface, for example of the worm wheel 35, when the disengagement operation of the clutch 20 is performed. When the additional stop surface comes into contact with the additional stop means during the disengagement operation of the clutch 20, a different actual stroke ST may be memorized and used for any other controls.

According to the preferred embodiment of the present invention, the CPU 41 determines that the stop surface 35b of the worm wheel 35 is in contact with the stop means 33a when the difference between the actual stroke ST and the target stroke STM is larger than a judgment value ΔS. Alternatively, the CPU 41 may determine that the stop surface 35b is in contact with the stop means 33a by detecting a variation of electric voltage or electric current (torque) supplied to the motor 32.

According to the embodiment of the present invention, when the worm wheel 35 is rotated at a low speed to bring the stop surface 35b into contact with the stop means 33a, the actuator 30 is controlled by a position feedback control. Alternatively, the actuator 30 may be controlled by a stroke speed feedback control or by gradually decreasing electric voltage or electric current supplied to the motor 32.

Further, according to the embodiment of the present invention, the actuator 30 is preferably provided with the assist spring 36 which is disposed between the worm wheel (35) and an inner wall of the housing (33) in a compressed condition. When the worm wheel 35 is rotated counterclockwise towards the contact position with the stop means 33b, the worm wheel 35 is applied with the biasing force of the assist spring 36 so as to assist the engagement operation of the clutch 20. Therefore, the clutch 20 is prevented from being disengaged due to external force.

## Claims

1. An electric control device (40) for an actuator (30) in which an electric motor (32) is controlled to drive a worm (34) for the bi-directional movement of a worm wheel (35) which has at least one limit of permitted movement defined by a stop means (33a), the control device comprising :
means (46) for driving the electric motor (32) until the limit of permitted movement is reached,
a contact judging means (41, steps 510 through 525) for judging when the worm wheel (35) has reached the limit of its permitted movement and is in contact with the stop means (33a);
a memorizing means (45, step 530) for memorizing information corresponding to the rotating angle of the worm wheel (35) when the judging means (41) judges that a stop surface (35b) is in contact with the stop means (33a);and
a driving control means (41) for controlling an operation of the electric motor (32) based upon the information memorized by the memorizing means (45, step 530)
**characterised in that** the electric control device (40) further comprises:
speed control means (41, 45) for controlling the rotating speed of rotation of the worm wheel (35) to set a smaller rotating speed for reducing the speed of rotation of the worm wheel (35) immediately before a stop surface (35b) comes into contact with the stop means (33a).

2. An electric control device according to claim 1, wherein the driving control means (41) controls the operation of the electric motor (32) to prevent the stop surface (35b) from contacting the stop means (33a).

3. An electric control device for an actuator (30) according to either preceding claim, wherein
the electric motor (32) is fixed to a housing (33);
the worm (34) is rotatably driven by the electric motor (32);
the worm wheel (35) is rotatably supported by the housing (33) and engaged with the worm (34); and
the stop means (33a) is in contact with the worm wheel (35) when the rotating angle of the worm wheel (35) reaches a predetermined angle.

4. An electric control device for an actuator according to any preceding claim, wherein the actuator (30) actuates a clutch (20) of a vehicle transmission (11) and includes an assist spring (36) for biasing the worm wheel (35) in a first direction to assist disengagement of the clutch during normal running of the vehicle and in a second direction to assist engagement of the clutch (20) when the vehicle is parked or the vehicle engine is stopped.

5. An electric control device for an actuator according to claim 4, wherein the directions of biasing force generated by the assist spring (36) are changed in response to rotating angle of the worm wheel (35) based upon a turn over point of the assist spring (36) as a direction switching point.

6. An electric control device for an actuator according to claim 3, the actuator (30) comprising;
the worm wheel (35) connected to an operating member (28) of a clutch (20) disposed between the transmission (11) and an engine (10), the operating member being biased in a predetermined direction and changing the transmitting condition of driving force from an engine (10) from the condition which the driving force is transmitted to the transmission (11) to the condition which the driving force is not transmitted to the transmission (11) when the operating member (28) is moved in the opposite direction to the predetermined direction,
the stop means (33a) being formed so as to contact the stop surface (35b) when the worm wheel (35) rotates over the predetermined angle in a direction corresponding to the predetermined direction, and
an assist spring (36) which biases the worm wheel (35) in a direction corresponding to the predetermined direction when the worm wheel (35) is within a predetermined angle range from the stop surface (35b) coming into contact with the stop means (33a), and biases the worm wheel (35) in an opposite direction to the rotating direction when the stop surface (35b) comes into contact with the stop means (33a).

7. An electric control device according to any preceding claim, wherein the actuator has a rod (31) connecting the actuator to a transmission of a vehicle, and the electric control device (40) controls the actuator (30) based upon signals from;
a first detecting means (51) for detecting a load generated upon an operation of a transmission shift lever;
a second detecting means (52) for detecting a vehicle speed;
a third detecting means (53) for detecting an actually selected shift stage in the transmission (11);
a fourth detecting means (54) for detecting a rotational speed of an input shaft (11a) of the transmission;
a fifth detecting means (55) for detecting a throttle opening degree of an engine of the vehicle;
a sixth detecting means (56) for detecting an engine rotational speed; and
a seventh detecting means (57) for detecting a position of the rod (31) which is fixed to the worm wheel (35) and moved back and forth in response to the rotating direction of the electric motor (32).

## Patentansprüche

1. Elektrische Steuerung (40) für einen Aktuator (30), in der ein Elektromotor (32) gesteuert wird, um eine Schnecke (34) für die bi-direktionale Bewegung eines Schneckenrad (35), das zumindest eine durch ein Anschlagmittel (33a) festgelegte Begrenzung einer zulässigen Bewegung aufweist, anzutreiben, wobei die Steuervorrichtung umfaßt:
Mittel (46) zum Antreiben des Elektromotors (32) solange bis die Begrenzung der zulässigen Bewegung erreicht ist,
ein Kontaktentscheidungsmittel (41, Schritt 510 bis 525) zum Entscheiden, wann das Schneckenrad (35) die Begrenzung seiner zulässigen Bewegung erreicht hat und an das Anschlagmittel (33a) anschlägt;
ein Speichermittel (45, Schritt 530) zum Abspeichern von Informationen, die dem Drehwinkel des Schneckenrads (35) entsprechen, wenn das Entscheidungsmittel (41) entscheidet, daß eine Anschlagfläche (35b) an das Anschlagmittel (33a) angeschlagen hat, und
ein Antriebssteuermittel (41) zum Steuern einer Betätigung des Elektromotors (32) basierend auf den von dem Speichermittel (45, Schritt 530) abgespeicherten Informationen
**dadurch gekennzeichnet, daß** die elektrische Steuerung (40) des weiteren umfaßt:
Geschwindigkeitssteuermittel (41, 45) zum Steuern der Drehzahl der Drehung des Schneckenrads (35) derart, daß zur Verringerung der Drehzahl des Schneckenrads (35) unmittelbar bevor eine Anschlagfläche (35b) an das Anschlagmittel (33a) anschlägt eine kleinere Drehzahl festgelegt wird.

2. Elektrische Steuerung nach Anspruch 1, wobei das Antriebssteuermittel (41) den Betrieb des Elektromotors (32) steuert, um zu verhindern, daß die Anschlagfläche (35b) das Anschlagmittel (33a) berührt.

3. Elektrische Steuerung für einen Aktuator (30) gemäß einem der voranstehenden Ansprüche, wobei
der Elektromotor (32) in einem Gehäuse (33) befestigt ist;
die Schnecke (34) von dem Elektromotor (32) gedreht wird;
das Schneckenrad (35) von dem Gehäuse (33) drehbar gelagert wird und mit der Schnecke (34) kämmt; und
das Anschlagmittel (33a) mit dem Schneckenrad (35) in Kontakt ist, wenn der Drehwinkel des Schneckenrads (35) einen vorbestimmten Winkel erreicht.

4. Elektrische Steuerung für einen Aktuator gemäß einem der voranstehenden Ansprüche, wobei der Aktuator (30) eine Kupplung (20) eines Fahrzeuggetriebes (11) betätigt und eine Hilfsfeder (36) zum Vorspannen des Schneckenrads (35) in eine erste Richtung aufweist, um das Ausrücken der Kupplung während des normalen Fahrens des Fahrzeugs zu unterstützen und zum Vorspannen in eine zweite Richtung, um das Einrücken der Kupplung (20) zu unterstützen, wenn das Fahrzeug geparkt wird oder der Fahrzeugmotor abgestellt wird.

5. Elektrische Steuerung für einen Aktuator gemäß Anspruch 4, wobei die Richtungen der durch die Hilfsfeder (36) erzeugten Vorspannkraft in Erwiderung auf den Drehwinkel des Schneckenrads (35) basierend auf einem Umschlagpunkt der Hilfsfeder (36) als ein Richtungswechselpunkt verändert werden.

6. Elektrische Steuerung für einen Aktuator gemäß Anspruch 3, wobei der Aktuator (30) umfaßt:
das Schneckenrad (35), das mit einem Betätigungselement (28) einer Kupplung (20), die zwischen dem Getriebe (11) und einem Motor (10) angeordnet ist, verbunden ist, wobei das Betätigungselement in eine vorbestimmte Richtung vorgespannt ist und den Übertragungszustand für die Antriebskraft für einen Motor (10) von dem Zustand, indem die Antriebskraft auf das Getriebe (11) übertragen wird, zu dem Zustand, indem die Antriebskraft nicht auf das Getriebe (11) übertragen wird, wenn das Betätigungselement (28) in die der vorbestimmten Richtung entgegengesetzten Richtung bewegt wird, wechseln,
das Anschlagmittel (33a) so ausgebildet ist, daß es die Anschlagsfläche (35b) berührt, wenn das Schneckenrad (35) sich über den vorbestimmten Winkel hinaus in eine der vorbestimmten Richtung entsprechende Richtung dreht, und
eine Hilfsfeder (36), die das Schneckenrad (35) in eine der vorbestimmten Richtung entsprechende Richtung vorspannt, wenn sich das Schneckenrad (35) innerhalb eines vorbestimmten Winkelbereichs von der Anschlagsfläche (35b), die mit dem Anschlagmittel (33a) in Kontakt kommt, befindet, und das Schneckenrad (35) in eine der Drehrichtung entgegengesetzte Richtung vorspannt, wenn die Anschlagfläche (35b) mit dem Anschlagmittel (33a) in Berührung kommt.

7. Elektrische Steuerung nach einem der voranstehenden Ansprüche, wobei der Aktuator eine Stange (31) aufweist, die den Aktuator mit einem Getriebe eines Fahrzeugs verbindet, und die elektrische Steuerung (40) den Aktuator (30) steuert, basierend auf Signalen von:
einem ersten Erfassungsmittel (51) zum Erfassen einer Kraft, die nach einer Betätigung eines Getriebeschalthebels erzeugt wurde;
einem zweiten Erfassungsmittel (52) zum Erfassen einer Fahrzeuggeschwindigkeit;
einem dritten Erfassungsmittel (53) zum Erfassen eines tatsächlich gewählten Gangs in dem Getriebe (11);
einem vierten Erfassungsmittel (54) zum Erfassen einer Drehzahl einer Eingangswelle (11a) des Getriebes;
einem fünften Erfassungsmittel (55) zum Erfassen eines Drosselöffnungsgrad eines Motors des Fahrzeugs;
einem sechsten Erfassungsmittel (56) zum Erfassen einer Motordrehzahl und
einem siebten Erfassungsmittel (57) zum Erfassen einer Position der Stange (31), die an dem Schneckenrad (35) befestigt ist und sich in Erwiderung auf die Drehrichtung des Elektromotors (32) hin- und herbewegt.

## Revendications

1. Dispositif de commande électrique (40) pour un actionneur (30) dans lequel un moteur électrique (32) est commandé pour entraîner une vis sans fin (34) pour le mouvement bidirectionnel d'une roue à vis sans fin (35) qui a au moins une limite du mouvement autorisé défini par un moyen d'arrêt (33a), le dispositif de commande comprenant :
un moyen (46) pour entraîner le moteur électrique (32) jusqu'à ce que la limite du mouvement autorisé soit atteinte ;
un moyen de jugement de contact (41, étapes 510 à 525) pour juger lorsque la roue à vis sans fin (35) a atteint la limite de son mouvement autorisé et qu'elle est en contact avec le moyen d'arrêt (33a) ;
un moyen de mémorisation (45, étape 530) pour mémoriser les informations correspondant à l'angle de rotation de la roue à vis sans fin (35) lorsque le moyen de jugement (41) juge qu'une surface d'arrêt (35b) est en contact avec le moyen d'arrêt (33a) ; et
un moyen de commande d'entraînement (41) pour commander un fonctionnement du moteur électrique (32) à partir des informations mémorisées par le moyen de mémorisation (45, étape 530)
**caractérisé en ce que** le dispositif de commande électrique (40) comprend en outre :
des moyens de commande de vitesse (41, 45) pour commander la vitesse de rotation de la rotation de la roue à vis sans fin (35) pour établir une vitesse de rotation plus petite pour réduire la vitesse de rotation de la roue à vis sans fin (35) juste avant qu'une surface d'arrêt (35b) ne vienne en contact avec le moyen d'arrêt (33a).

2. Dispositif de commande électrique selon la revendication 1, dans lequel le moyen de commande d'entraînement (41) commande le fonctionnement du moteur électrique (32) pour empêcher que la surface d'arrêt (35b) ne contacte le moyen d'arrêt (33a).

3. Dispositif de commande électrique pour un actionneur (30) selon l'une ou l'autre revendication précédente, dans lequel :
le moteur électrique (32) est fixé à un carter (33) ;
la vis sans fin (34) est entraînée de manière rotative par le moteur électrique (32) ;
la roue à vis sans fin (35) est supportée de manière rotative par le carter 33) et est mise en prise avec la vis sans fin (34) ; et
le moyen d'arrêt (33a) est en contact avec la roue à vis sans fin (35) lorsque l'angle de rotation de la roue à vis sans fin (35) atteint un angle prédéterminé.

4. Dispositif de commande électrique pour un actionneur selon n'importe quelle revendication précédente, dans lequel l'actionneur (30) fait marcher un embrayage (20) d'une transmission de véhicule (11) et inclut un ressort d'assistance (36) pour solliciter la roue à vis sans vis (35) dans une première direction pour aider au débrayage de l'embrayage pendant un fonctionnement normal du véhicule et dans une second direction pour aider à la mise en prise de l'embrayage (20) lorsque le véhicule est parqué ou lorsque le véhicule est arrêté.

5. Dispositif de commande électrique pour un actionneur selon la revendication 4, dans lequel les directions de la force de sollicitation générée par le ressort d'assistance (36) sont changées en réponse à l'angle de rotation de la roue à vis sans fin (35) à partir d'un point de transformation du ressort d'assistance (36) comme étant un point de changement de direction.

6. Dispositif de commande électrique pour un actionneur selon la revendication 3, l'actionneur (30) comprenant
la roue à vis sans fin (35) raccordée à un organe de fonctionnement (28) d'un embrayage (20) disposé entre la transmission (11) et un moteur (10), l'organe de fonctionnement étant sollicité dans une direction prédéterminée et modifiant la condition de transmission de la force d'entraînement provenant d'un moteur (10) de la condition selon laquelle la force d'entraînement est transmise à la transmission (11) à la condition selon laquelle la force d'entraînement n'est pas transmise à la transmission (11) lorsque l'organe de fonctionnement (28) est déplacé dans la direction opposée à la direction prédéterminée,
le moyen d'arrêt (33a) étant formé de sorte à contacter la surface d'arrêt (35b) lorsque la roue à vis sans fin (35) tourne selon l'angle prédéterminé dans une direction correspondant à la direction prédéterminée, et
un ressort d'assistance (36) qui sollicite la roue à vis sans fin (35) dans une direction correspondant à la direction prédéterminée lorsque la roue à vis sans fin (35) est à l'intérieur d'une plage d'angle prédéterminée à partir de la surface d'arrêt (35b) qui vient en contact avec le moyen d'arrêt (33a) et sollicite la roue à vis sans fin (35) dans une direction opposée à la direction de rotation lorsque la surface d'arrêt (35b) vient en contact avec le moyen d'arrêt (33a).

7. Dispositif de commande électrique selon n'importe quelle revendication précédente, dans lequel l'actionneur (30) a une tige (31) reliant l'actionneur à une transmission d'un véhicule et le dispositif de commande électrique (40) commande l'actionneur (30) sur la base des signaux provenant :
d'un premier moyen de détection (51) pour détecter une charge générée lors d'un fonctionnement d'un levier de changement de vitesse de transmission ;
d'un second moyen de détection (52) pour détecter une vitesse de véhicule ;
d'un troisième moyen de détection (53) pour détecter une phase de changement vraiment sélectionnée dans la transmission (11) ;
d'un quatrième moyen de détection (54) pour détecter une vitesse de rotation d'un arbre d'entrée (11a) de la transmission ;
d'un cinquième moyen de détection (55) pour détecter un degré d'ouverture du papillon des gaz d'un moteur du véhicule;
d'un sixième moyen de détection (56) pour détecter une vitesse de rotation du moteur ; et
d'un septième moyen de détection (57) pour détecter une position de la tige (31) qui est fixée à la roue à vis sans fin (35) et qui est mue d'un mouvement de va-et-vient en réponse à la direction de rotation du moteur électrique (32).
